# EUROPÄISCHE PATENTSCHRIFT

(11) **EP 2 822 715 B1**
(45) Veröffentlichungstag und Bekanntmachung des Hinweises auf die Patenterteilung: **20.12.2017**
(21) Anmeldenummer: 13706450.7
(22) Anmeldetag: 12.02.2013
(51) Int. Cl.: B21J 15/10, B21J 15/36, B25B 23/00

(54) **WERKZEUGVERBINDUNG**
TOOL CONNECTION
LIAISON D'OUTIL

(30) Priorität: 06.03.2012 DE 102012101894
(43) Veröffentlichungstag der Anmeldung: 14.01.2015
(73) Patentinhaber: TKR Spezialwerkzeuge GmbH, 58285 Gevelsberg (DE)
(72) Erfinder: WEYLAND, Thorsten, 58239 Schwerte (DE)
(74) Vertreter: Kalkoff & Partner
(86) Internationale Anmeldenummer: PCT/EP2013/052766
(87) Internationale Veröffentlichungsnummer: WO 2013/131721

(56) Entgegenhaltungen:
- EP-A1- 2 223 760
- DE-U1-202011 050 549
- DE-U1-202011 050 549
- DE-U1-202011 109 763
- DE-U1-202011 109 763
- GB-A- 1 111 390
- US-A- 5 361 473
- US-A1- 2006 005 669

## Beschreibung

Die Erfindung betrifft eine Werkzeugverbindung zur Anordnung eines Nietwerkzeuges an einer Nietwerkzeugaufnahme, mit einer am Nietwerkzeug angeordneten Anlagefläche zum Abstützen des Nietwerkzeuges an einer an der Nietwerkzeugaufnahme angeordneten Stützfläche, wobei an dem Einen von Nietwerkzeug oder Nietwerkzeugaufnahme ein Zapfen und an dem Anderen von Nietwerkzeug oder Nietwerkzeugaufnahme eine Zapfenaufnahme angeordnet und der Zapfen in die Zapfenaufnahme einbringbar und aus ihr entnehmbar ist und das Nietwerkzeug an der Nietwerkzeugaufnahme durch eine Magnetkraft lösbar arretierbar ist. Weiter betrifft die Erfindung ein Nietwerkzeug, eine Nietwerkzeugaufnahme sowie einen Nietwerkzeugadapter.

Beim Setzen eines Nietes wird der Niet mit Hilfe eines Nietwerkzeuges verpresst. Als Nietwerkzeug werden zumeist sogenannte Döpper verwendet, die hohe Druckkräfte auf den Niet aufbringen und so die Nietköpfe formen. Hierfür sind unterschiedliche Werkzeuge mit Nietwerkzeugaufnahmen bekannt, die zur Anordnung des Nietwerkzeuges ausgebildet sind. So ist es beispielsweise üblich, die Nietwerkzeuge mit pneumatisch, hydraulisch oder auch elektrisch betriebenen Werkzeugen mit Nietwerkzeugaufnahmen zu verbinden.

Um die beim Nietvorgang auftretenden hohen Kräfte sicher übertragen zu können, liegen die Nietwerkzeuge üblicherweise flächig, beispielsweise mit einer Anlagefläche an einer an der Nietwerkzeugaufnahme angeordneten Stützflächen an.

Zur Fixierung des Nietwerkzeuges an der Nietwerkzeugaufnahme wird üblicherweise das Nietwerkzeug mit der Nietwerkzeugaufnahme verschraubt, wobei in der eingeschraubten Lage die Anlagefläche und die Stützfläche in Kontakt befindlich sind.

Mit zunehmender Einsatzdauer des Werkzeuges kann es aufgrund der auftretenden hohen Kräfte beim Nietvorgang zu einem Lösen der Schraubverbindung kommen, in deren Folge sich die Anlagefläche und die Stützfläche nicht mehr in Kontakt befinden. Dies führt dazu, dass bei einem nachfolgenden Nietvorgang die auftretenden Kräfte nicht mehr über die Anlagefläche und die Stützfläche, sondern allein über die Schraubverbindung übertragen werden können. Hierbei kommt es jedoch in einer Vielzahl von Fällen zu Verformungen des Nietwerkzeuges, der Nietwerkzeugaufnahme oder sogar zum Abriss der Schraubverbindung vom Nietwerkzeug. Die hierbei auftretenden Schäden am Werkzeug, der Nietwerkzeugaufnahme und/oder dem Nietwerkzeug sind erheblich und können oftmals nur kosten-/zeitaufwendig behoben werden.

Ferner erlaubt eine Schraubverbindung kein schnellen Wechselvorgang des Nietwerkzeuges und zudem können bereits leichten Verformungen an der Verbindung eine Reparatur deutlich erschweren.

Weitere Werkzeugverbindungen zur lösbaren Anordnung eines Nietwerkzeuges an einer Nietwerkzeugaufnahme sind aus der US 5 361 473 A bekannt. Auch die dort offenbarten Verbindungen sind formschlüssiger Art und bergen das Risiko der Verformung oder Zerstörung des Nietwerkzeuges, der Nietwerkzeugaufnahme und/oder des den Formschluss bildenden Verbindungselements durch die bei einem Nietvorgang auftretenden Kräfte.
Es ist somit Aufgabe der Erfindung, eine Werkzeugverbindung zum Anordnen eines Nietwerkzeuges an einer Nietwerkzeugaufnahme, ein Nietwerkzeug, eine Nietwerkzeugaufnahme und einen Nietwerkzeugadapter bereitzustellen, mittels der ein sich wiederholender Nietvorgang beschädigungsfrei durchführbar und ein Auswechseln des Nietwerkzeuges besonders einfach möglich ist.

Gelöst wird die Aufgabe durch eine Werkzeugverbindung mit den Merkmalen des Anspruchs 1, ein Nietwerkzeug mit den Merkmalen des Anspruchs 10, eine Nietwerkzeugaufnahme mit den Merkmalen des Anspruchs 11 und einen Nietwerkzeugadapter mit den Merkmalen des Anspruchs 12. Vorteilhafte Weiterbildungen der Erfindungen sind in den abhängigen Unteransprüche angegeben.

Die Werkzeugverbindung zur Anordnung eines Nietwerkzeuges an einer Nietwerkzeugaufnahme weist eine am Nietwerkzeug angeordnete Anlagefläche zum Abstützen des Nietwerkzeuges an einer an der Nietwerkzeugaufnahme angeordneten Stützfläche auf, wobei an dem Einen von Nietwerkzeug oder Nietwerkzeugaufnahme ein Zapfen und an dem Anderen von Nietwerkzeug oder Nietwerkzeugaufnahme eine Zapfenaufnahme angeordnet und der Zapfen in die Zapfenaufnahme einbringbar und aus ihr entnehmbar ist und das Nietwerkzeug an der Nietwerkzeugaufnahme durch eine Magnetkraft lösbar arretierbar ist.

Zum Herstellen der lösbaren Arretierung mittels der Magnetkraft ist erfindungsgemäß das Nietwerkzeug und/oder die Nietwerkzeugaufnahme zumindest teilweise ferromagnetisch ausgebildet und am Nietwerkzeug ist ein Werkzeugmagnet und/oder an der Nietwerkzeugaufnahme ein Aufnahmemagnet angeordnet.

Die ferromagnetische Ausbildung kann beispielsweise durch die Anordnung eines ferromagnetischen Körpers am Nietwerkzeug und/oder an der Nietwerkzeugaufnahme erfolgen. Vorzugsweise ist jedoch das Nietwerkzeug und/oder die Nietwerkzeugaufnahme selbst aus einem ferromagnetischen Material gebildet. In jedem Fall ist an Einem von Nietwerkzeug oder Nietwerkzeugaufnahme ein Werkzeugmagnet beziehungsweise Aufnahmemagnet angeordnet und das Andere von Nietwerkzeug und/oder Nietwerkzeugaufnahme ist zumindest teilweise ferromagnetisch ausgebildet. Vorzugsweise sind sowohl die Nietwerkzeugaufnahme als auch das Nietwerkzeug ferromagnetisch ausgebildet.

Die erfindungsgemäß eingesetzte Magnetkraft ermöglicht eine sichere Arretierung des Nietwerkzeuges an der Nietwerkzeugaufnahme und verhindert dadurch in Wirkrichtung des Nietwerkzeuges eine Positionsveränderung des Nietwerkzeuges gegenüber der Nietwerkzeugaufnahme. Die erfindungsgemäße Werkzeugverbindung ermöglicht somit auch bei wiederholter Nutzung des Nietwerkzeuges ein dauerhaftes und sicheres Aneinanderliegen der Stütz- und Anlagefläche, wodurch beim Nietvorgang ein Verformen oder eine Beschädigung des Werkzeuges, des Nietwerkzeuges oder der Nietwerkzeugaufnahme verhindert wird.

Auch ist der Austausch des Nietwerkzeuges, beispielsweise aufgrund von Abnutzungen oder bei einer notwendigen Formänderung des Nietwerkzeuges besonders einfach durch die lösbare Arretierung möglich. Die erfindungsgemäße Werkzeugverbindung verhindert dabei beim Auswechseln des Nietwerkzeuges zuverlässig eine falsche Anordnung des neuen Nietwerkzeuges, aus der andernfalls Schäden beim Nietvorgang resultieren können.

Anstelle des Nietwerkzeuges können beispielsweise auch Nietwerkzeugadapter, die dazu dienen, alternative Nietwerkzeuge an dem Werkzeug anzuordnen, mit der Nietwerkzeugaufnahme verbunden werden.

Die Stützfläche und die Anlagefläche sind vorteilhaft derart aufeinander abgestimmt und positioniert, dass die beiden Flächen flächig aneinander anliegen und die Wirkrichtung des Nietwerkzeuges senkrecht, d.h. in einem Winkel von 90° zu den beiden Flächen (Anlagefläche und Stützfläche) verläuft. Die Anlage- und Stützfläche befinden sich in Kontakt und beim Nietvorgang erfolgt eine Kraftübertragung von der Nietwerkzeugaufnahme auf das Nietwerkzeug über die aneinander anliegenden Flächen.

Die Anordnung des Werkzeugmagneten am Nietwerkzeug beziehungsweise die Anordnung des Aufnahmemagneten an der Nietwerkzeugaufnahme kann unterschiedlich erfolgen. Zum Einen kann das Nietwerkzeug und/oder die Nietwerkzeugaufnahme als Magnet ausgebildet sein. Auch ist es möglich, den Werkzeugmagneten und/oder den Aufnahmemagneten separat auszubilden und in das Nietwerkzeug und/oder die Nietwerkzeugaufnahme und unter der jeweiligen Oberfläche der Anlagefläche/Stützfläche anzuordnen.

Erfindungsgemäß ist der Werkzeugmagnet jedoch zumindest teilweise in der Anlage fläche und/oder der Aufnahmemagnet zumindest teilweise in der Stützfläche angeordnet. Dies bedeutet, dass ein in das Nietwerkzeug oder in die Nietwerkzeugaufnahme eingebrachter Magnet in die Oberfläche der Anlagefläche beziehungsweise in die Oberfläche der Stützfläche integriert und somit Bestandteil dieser ist, wodurch die wirksamen magnetischen Kräfte besonders vorteilhaft genutzt und die Magneten besonders klein ausgeführt werden können.

Ob entweder ein Werkzeugmagnet oder ein Aufnahmemagnet oder sowohl ein Werkzeugmagnet als auch ein Aufnahmemagnet angeordnet sind, ist frei wählbar und richtet sich vorrangig nach der notwendigen Magnetkraft zum lösbaren Arretieren des Nietwerkzeuges an der Nietwerkzeugaufnahme. Auch die Größe und Stärke des jeweiligen Magneten ist frei wählbar. So können beispielsweise spezielle Neodymmagnete als Werkzeugmagnete und/oder Aufnahmemagnete verwendet werden.

Der Zapfen und die Zapfenaufnahme sind korrespondierend ausgebildet, d.h. die Zapfenaufnahme ist zur Aufnahme des Zapfens ausgebildet. So weist der Zapfen und/oder die Zapfenaufnahme besonders bevorzugt einen runden und/oder ovalen Querschnitt auf. Es sind jedoch auch eckige d.h. polygonale Querschnitte möglich.

Der Zapfen und die Zapfenaufnahme können sowohl am Nietwerkzeug als auch an der Nietwerkzeugaufnahme ausgebildet sein. Besonders vorteilhafterweise ist der Zapfen jedoch am Nietwerkzeug und die Zapfenaufnahme an der Nietwerkzeugaufnahme ausgebildet.

Unter arretierbar im Sinne der Erfindung ist eine Anbindung des Nietwerkzeuges an der Nietwerkzeugaufnahme zu verstehen, die im Betrieb ein selbstständiges Lösen des Nietwerkzeuges von der Nietwerkzeugaufnahme verhindert und zerstörungsfrei lösbar ist. D.h. das Nietwerkzeug kann beispielsweise von Hand aus der Nietwerkzeugaufnahme entfernt werden. Das Nietwerkzeug kann jedoch keinesfalls aus der Nietwerkzeugaufnahme herausfallen.

Nach einer Weiterbildung der Erfindung ist das Nietwerkzeug zwischen einer Einschubposition, in der der Zapfen vollständig in die Zapfenaufnahme einbringbar und aus ihr entnehmbar ist und einer Gebrauchsposition, in der der Zapfen in Zapfenlängsachsenrichtung in der Zapfenaufnahme fixiert ist, verstellbar.

Die Einschubposition stellt somit beispielsweise die Position dar, in der der Zapfen vollständig in die Zapfenaufnahme eingebracht ist und von der aus der Zapfen in die Gebrauchsposition verstellbar, beispielsweise kippbar, schwenkbar, bevorzugt jedoch drehbar ist. In der Einschubposition wirkt somit vorzugsweise ausschließlich die Magnetkraft zur Arretierung des Zapfens an der Zapfenaufnahme.

In der Gebrauchsposition erfolgt zusätzlich zur Arretierung durch die Magnetkraft eine weitere Fixierung des Zapfens an der Zapfenaufnahme in Zapfenlängsachsenrichtung, durch die eine Entnahme des Zapfens aus der Zapfenaufnahme blockiert ist.

Der Werkzeugmagnet und/oder der Aufnahmemagnet ist gemäß einer Weiterbildung der Erfindung derart positioniert, dass der Werkzeugmagnet in der Gebrauchsposition eine magnetische Anziehungskraft auf die Stützfläche und/oder der Aufnahmemagnet in der Gebrauchsposition eine magnetische Anziehungskraft auf die Anlagefläche aus übt.

Das Nietwerkzeug ist somit in der Gebrauchsposition zusätzlich zur Fixierung über den Zapfen an der Zapfenaufnahme auch über die Magnetkraft lösbar arretiert. Hierdurch kann eine besonders sichere Anlage der Anlagefläche an der Stützfläche in der Gebrauchsposition gewährleistet werden.

Besonders bevorzugt ist der Werkzeugmagnet derart in der Anlagefläche angeordnet, dass er in der Einschubposition des Zapfens in die Zapfenaufnahme in magnetischer Wirkverbindung mit dem Aufnahmemagnet befindlich ist.

Dies bedeutet, dass der Aufnahmemagnet und der Werkzeugmagnet bei einem in die Zapfenaufnahme eingeschobenen Zapfen in Zapfenlängsachsenrichtung direkt aneinandergrenzen, gegebenenfalls in Kontakt stehen oder zumindest entlang einer Längsachse und nur getrennt von den Oberflächen der Anlagefläche und/oder der Stützfläche angeordnet sind.

Vorzugsweise werden in der Anlage- und/oder der Stützfläche jeweils mehr als ein Magnet, beispielsweise zwei Magnete pro Anlage-/Stützfläche angeordnet. Diese werden bevorzugt diametral am Zapfen bzw. an der Zapfenaufnahme angeordnet.

Zur Erhöhung der magnetischen Wirkverbindung sind je Fläche (Anlagefläche und Stützfläche) beispielsweise jeweils drei, vier oder mehr Magnete (Werkzeugmagnete und/oder Aufnahmemagnete), die vorzugsweise in einem gleichmäßigen Abstand zueinander positioniert sind, angeordnet.

Um ein besonders einfaches Auswechseln des Nietwerkzeuges zu ermöglichen, sind der Werkzeugmagnet und der Aufnahmemagnet derart zueinander angeordnet, dass sich der Aufnahmemagnet und der Werkzeugmagnet in der Einschubposition in Wirkverbindung abstoßen. Sobald die beiden Magnete in Wirkverbindung befindlich sind, d.h. ihre Magnetkräfte in Wechselwirkung zueinander stehen, wird in vorteilhafterweise das Nietwerkzeug aus der Nietwerkzeugaufnahme gedrückt und die Entnahme des Nietwerkzeuges ist besonders einfach möglich. Weiter bewirkt der magnetisch abstoßende Effekt beim Einsetzen des Nietwerkzeuges in die Nietwerkzeugnahme einen besonders vorteilhaften Verschiebeeffekt, der das Nietwerkzeug gegenüber der Nietwerkzeugaufnahme um die Zapfenlängsachse von der Einschubposition in eine Gebrauchsposition dreht.

Hinzu kommt, dass auch im Betrieb des Nietwerkzeuges ein Verdrehen des Nietwerkzeuges an der Nietwerkzeugaufnahme in die Einschubposition verhindert wird, da die gegenseitig abstoßende Wirkverbindung ein durch den Betrieb des Nietwerkzeuges erzeugtes Verdrehen des Werkzeugmagneten bis in die abstoßende Wirkverbindung hinein verhindert.

Bei dem Döpper werden häufig unterschiedliche Pressformen eingesetzt, d. h. der Döpper weist eine spezifische Ausnehmung auf, die den Nietkopf beim Verpressen in eine spezielle Form verpresst. Hierbei kann beispielsweise abhängig von der Form der Ausnehmung ein besonders starkes Anhaften des Nietkopfes am Döpper erfolgen, so dass bei dem Versuch, den Döpper vom verpressten Nietkopf zu lösen, der Döpper am Nietkopf haften bleibt. Bei sehr großen Haftkräften kommt es daher vor, dass die Magnetkraft, die den Döpper an der Werkzeugaufnahme arretiert, beim Versuch den Döpper vom Nietkopf zu lösen, nicht ausreicht und der Döpper gegen die Magnetkraft aus der Nietwerkzeugaufnahme herausgezogen wird.

Gemäß einer Weiterentwicklung der Erfindung weist die Werkzeugverbindung einen gegenüber einer Zapfenlängsachse radial vorstehenden, den Zapfen maximal ringförmig umlaufenden Zapfenvorsprung und eine die Zapfenaufnahme maximal ringförmig umlaufende Hinterschneidung auf, wobei in der Gebrauchsposition des Zapfens der Vorsprung in Zapfenlängsachsenrichtung mit der Hinterschneidung in Wirkverbindung befindlich ist.

Die bevorzugte Ausführungsform sichert den Döpper in besonders vorteilhafterweise gegen ein Herausziehen aus der Nietwerkzeugaufnahme bei axialen Kräften, die größer sind als die Magnetkraft.

Der Zapfenvorsprung kann in unterschiedlicher Weise, beispielsweise als Stab, der den Zapfen durchdringt und aus der Zapfenlängsachse herausragt, ausgebildet sein. Auch ist der Zapfenvorsprung als Endkappe des Zapfens, d.h. als ein ein Zapfenende abschließender Deckel, der über den Zapfenquerschnitt hervorsteht, ausbildbar. Vorteilhafterweise kann der Zapfen als eine den Zapfen zumindest teilweise umlaufende Ebene oder Fläche ausgebildet sein.

Unter einer Hinterschneidung wird ein quer zur Zapfenaufnahmenlängsachsenrichtung ausgebildeter Vorsprung verstanden. Die Hinterschneidung kann aus der Zapfenaufnahme selbst, beispielsweise durch ein spanabhebendes Verfahren ausgebildet sein, ist vorteilhafterweise jedoch durch einen zusätzlichen in oder an der Zapfenaufnahme angeordneten Hinterschneidungskörper ausgebildet.

Maximal einmal umläuft die Hinterschneidung die Zapfenaufnahme entsprechend dem Zapfenvorsprung. Die Form der Hinterschneidung ist dabei vorteilhafterweise auf die Form des Zapfenvorsprungs angepasst.

Unter einem maximal ringförmig umlaufenden Zapfenvorsprung/Hinterschneidung wird ein Zapfenvorsprung/Hinterschneidung verstanden, der den Zapfen/die Zapfenaufnahme um maximal 360° umschließt Es ist somit ein Zapfen/ eine Zapfenaufnahme ohne Gewinde ausgebildet.

Die Anordnung und die Positionierung der Hinterschneidung an der Zapfenaufnahme und des Zapfenvorsprungs am Zapfen erfolgen derart, dass in der Gebrauchsposition des Zapfens der Vorsprung in Zapfenlängsachsenrichtung mit der Hinterschneidung in Wirkverbindung befindlich ist, d.h. der Zapfen ist an der Zapfenaufnahme fixiert.

Unter einer Wirkverbindung (unter fixiert) wird beispielsweise auch ein Überlappen des Zapfenvorsprungs mit der Hinterschneidung in Zapfenlängsachsenrichtung verstanden. Auch kann die Wirkverbindung kontaktlos ausgebildet sein, d.h. das in Zapfenlängsachsenrichtung zwischen dem Zapfenvorsprung oder einem Teil des Zapfenvorsprungs und der Hinterschneidung kein direkter Kontakt besteht und/oder das der Kontakt erst im Betrieb zustande kommt.

Hieraus ergibt sich, dass alternativ auch eine Ausbildung möglich ist, bei der der Zapfenvorsprung und die Hinterschneidung sich zumindest in der Gebrauchsposition in Kontakt befinden.

Die Ausrichtung des Zapfenvorsprungs, in diesem Fall der Winkel zwischen dem Zapfenvorsprung oder zumindest einer Fläche des Zapfenvorsprunges und der Zapfenlängsachse, liegt zwischen 45° und 135°, vorteilhaft 90° ± 2°.

Auch kann der Zapfen mehrere Flächen, beispielsweise eine in Richtung eines Nietwerkzeugkopfes ausgerichtete obere Fläche und eine in Richtung des Zapfenendes ausgerichtete untere Fläche, die somit in Zapfenlängsachsenrichtung überlappen, aufweisen, wobei die untere Fläche beispielsweise einen 90°-Winkel zur Zapfenlängsachse aufweist und die obere Fläche mit einem Winkel < 90° oder einem Winkel > 90°zur Zapfenlängsachse angeordnet ist.

Besonders bevorzugt weist der Zapfenvorsprung eine Kontaktfläche auf, die gegenüber der Zapfenlängsachse eine Steigung aufweist. In diesem Zusammenhang wird unter einer Steigung ein Winkel zwischen der Kontaktfläche und/oder des Zapfenvorsprunges und der Zapfenlängsachse verstanden, der nicht 90°beträgt.

Somit ist der Zapfenvorsprung oder zumindest eine als Kontaktfläche ausgebildete Fläche des Zapfenvorsprunges als spiralförmig den Zapfen umlaufender Zapfenvorsprung/ Kontaktfläche ausbildbar, wobei der Zapfenvorsprung sich maximal einmal, d.h. um 360° um den Zapfen erstreckt.

Die Größe des Zapfenvorsprunges, d.h. die Höhe (in Richtung der Zapfenlängsachse), die Breite (quer zur Zapfenlängsachse) oder die Länge des Zapfenvorsprungs ist an die technischen Voraussetzungen anpassbar. Vorteilhafterweise umschließt der Zapfenvorsprung den Zapfen in einem Winkel von 90° ± 10°. Dies bedeutet, die Breite des Zapfenvorsprunges entspricht vorteilhafterweise einer Breite/eines Durchmessers des Zapfens.

Die Ausrichtung einer Kontaktfläche mit Steigung ermöglicht es, zwischen der Kontaktfläche und der Anlage-/ Stützfläche eine Klemmverbindung herzustellen, die eine feste Fixierung des Nietwerkzeuges an der Nietwerkzeugaufnahme ermöglicht. Aufgrund dessen, dass auch bei einer derartigen Ausbildung die Klemmrichtung entgegen der Arbeitsrichtung des Döppers erfolgt, ist eine Beschädigung der Werkzeugverbindung aufgrund der hohen Kräfte beim Nietvorgang weiterhin ausgeschlossen und eine sichere Auflage zwischen der Anlagefläche und der Stützfläche gewährleistet.

Um eine besonders hohe Sicherheit gegen den Auszug des Zapfens aus der Zapfenaufnahme in der Gebrauchsposition zu erreichen, sind gemäß einer Weiterbildung der Erfindung mindestens zwei im Abstand voneinander radial vom Zapfen vorstehende Zapfenvorsprünge, die den Zapfen gemeinsam maximal ringförmig umschließen und vorzugsweise in einer, zumindest weitestgehend senkrecht zu einer Zapfenlängsachse verlaufenden Ebene angeordnet.

Der Abstand zwischen den Zapfenvorsprüngen ist beliebig wählbar. So können die Zapfen sich beispielsweise gegenüberliegen und in einem gleichmäßigen Abstand zueinander um den Zapfen angeordnet sein. Auch bei der Anordnung von mehr als zwei Zapfen wird ein gleichmäßiger Abstand zwischen den Zapfen bevorzugt.

Die Zapfenvorsprünge verlaufen vorzugsweise in einer Ebene um den Zapfen. Der Winkel zwischen der Ebene und der Zapfenlängsachse liegt vorzugsweise zwischen 45° und 135°, vorteilhaft bei 90° ± 2°.

Bei der Anordnung mehrerer Zapfenvorsprünge können die jeweiligen Kontaktflächen auch unterschiedliche Steigungen gegenüber der Zapfenlängsachse aufweisen.

Besonders bevorzugt sind zwei Zapfenvorsprünge diametral am Zapfen angeordnet, die gegebenenfalls beide zumindest teilweise der Breite des Zapfens entsprechen. Auch ist es möglich, dass die beiden Zapfenvorsprünge gemeinsam beispielsweise nur 180°, 150°, 120° oder 90° abdecken.

Die gemeinsame Breite mehrerer um den Zapfen angeordneter Zapfenvorsprünge, d.h. der Winkel, der durch die den Zapfen umschließenden Zapfenvorsprünge abdeckt wird, beträgt maximal 360°, d.h. sie sind einmal ringförmig umlaufend, wobei die jeweiligen Zapfenvorsprünge auch unterschiedlich breit ausgebildet sein können.

Die Hinterschneidung kann beispielsweise einstückig mit der Nietwerkzeugaufnahme oder auch durch separat ausgebildete Hinterschneidungskörper erfolgen. Besonders bevorzugt ist die Hinterschneidung durch einen in die Zapfenaufnahme hineinragenden Bolzen gebildet.

Der Bolzen ist bevorzugt rund ausgebildet, wobei auch andere Querschnittsformen denkbar sind. Runde Bolzen sind jedoch besonders einfach in beispielsweise von außen in die Nietwerkzeugaufnahme eingebohrte Löcher, die sich abschnittsweise durch die Zapfenaufnahme erstrecken, einschiebbar und verklemmbar, so dass der Bolzen die Hinterschneidung in der Zapfenaufnahme bildet.

Besonders bevorzugt erstreckt sich der Bolzen dabei quer zu einer Längsachse der Zapfenaufnahme. Die Ausrichtung des Bolzens erfolgt somit bevorzugt in einem Winkel von 90° zur Längsachse der Zapfenaufnahme. Unter quer in diesem Sinne werden jedoch auch Winkel im Bereich zwischen 45° und 135° zu der Längsachse verstanden.

Gemäß einer Weiterbildung der Erfindung ist die Hinterschneidung durch in die Zapfenaufnahme vorstehende Bolzen, insbesondere durch einander gegenüberliegend angeordnete Bolzen gebildet. Durch die Anordnung mehrerer Bolzen, beispielsweise zweier Bolzen, sind zwei gegenüberliegende Hinterschneidungen ausbildbar, die einen besonders sicheren Halt der Zapfenvorsprünge in der Gebrauchsposition ermöglichen.

Nach einer Weiterbildung der Erfindung schließt sich in Richtung des freien Endes des Zapfens an die Hinterschneidung ein Gewinde an. Durch das Gewinde ist es möglich, die Nietwerkzeuge auch mit bisher üblichen Werkzeugverbindungen, die mittels eines Schraubgewindes eine Verbindung zwischen Nietwerkzeug und Nietwerkzeugaufnahme herstellen, zu verwenden.

Nach einer Weiterbildung der Erfindung ist zwischen dem Nietwerkzeug und der Nietwerkzeugaufnahme ein Nietwerkzeugadapter angeordnet, wobei an einem ersten Ende des Nietwerkzeugadapters ein Adapter-Zapfen mit einem gegenüber einer Adapter-Zapfenlängsachse radial vorstehenden Adapter-Zapfen maximal ringförmig umschließenden Adapter-Zapfenvorsprung und an Einem dem ersten Ende gegenüberliegenden zweiten Ende des Nietwerkzeugadapters eine Adapter-Zapfenaufnahme mit einer maximal ringförmig umschließenden Adapter-Hinterschneidung angeordnet ist und der zwischen dem Nietwerkzeug und der Nietwerkzeugaufnahme angeordnete Nietwerkzeugadapter ist zwischen einer Einschubposition, in der der Adapter-Zapfen vollständig in die Zapfenaufnahme und der Zapfen vollständig in die Adapter-Zapfenaufnahme einbringbar und aus ihr entnehmbar ist und einer Gebrauchsposition, in der der Vorsprung am Zapfen in Zapfenlängsachsenrichtung mit der Adapter-Hinterschneidung und dem Adapter-Vorsprung in Adapter-Zapfenlängsachsenrichtung mit der Hinterschneidung in Wirkverbindung ist verstellbar.

Bei zu vernietenden Körpern mit besonders tief im Körper angeordneten Nieten sind Nietbügel mit besonders großer Öffnungsweite notwendig, die den großen Abstand überbrücken. Der Abstand zwischen den Nietwerkzeugen (Döppern) ist bei derartigen Nietbügeln jedoch ebenfalls sehr groß, so dass ein Nietwerkzeugadapter eingesetzt wird, damit das zum Betreiben des Nietwerkzeugs verwendete Werkzeug weiterhin nur eine kurze Pressstrecke zum Setzen des Nietes überwinden muss.

Der Adapterzapfen ist entsprechend der vorbeschriebenen Ausführungen des Zapfens, die Adapterzapfenlängsachse entsprechend der Zapfenlängsachse, der Adapterzapfenvorsprung entsprechend des Zapfenvorsprungs, die Adapterzapfenaufnahme entsprechend der Zapfenaufnahmen, die Adapterhinterschneidung entsprechend der Hinterschneidung und die Adapterzapfenlängsachsenrichtung entsprechend der Zapfenlängsachsenrichtung ausbildbar.

Der Adapterzapfen ist somit sowohl mit einer Nietwerkzeugaufnahme als auch mit einem Nietwerkzeug verbindbar. Auch ist es möglich, mehrere Nietwerkzeugadapter mittels der Werkzeugverbindung aneinander zu koppeln, um bei Nietbügeln mit besonders großer Öffnungsweite den Pressweg zum Setzen des Nietes kurz zu halten.

Der Nietwerkzeugadapter weist somit beide Bestandteile der erfinderischen Werkzeugverbindung auf, wobei an dem ersten Ende des Nietwerkzeugadapters, der dem Zapfen entsprechende Adapterzapfen und an dem dem ersten Ende gegenüberliegenden zweiten Ende, die der Zapfenaufnahme entsprechende Adapterzapfenaufnahmen angeordnet ist.

Erfindungsgemäß weist der Nietwerkzeugadapter an seinem ersten Ende und/oder seinem zweiten Ende ebenfalls einen den vorbeschriebenen Ausführungen entsprechenden Adapterwerkzeugmagneten (Werkzeugmagnet) und/oder einen Adapteraufnahmemagnet (Aufnahmemagnet) auf und ist zumindest teilweise ferromagnetisch ausgebildet.

Besonders bevorzugt weist der Adapterzapfenvorsprung ebenfalls eine zur Kontaktfläche identisch ausgebildete Adapter-Zapfen-Kontaktfläche auf, die gegenüber der Adapter-Zapfenlängsachse eine Steigung aufweist, wobei in der Gebrauchsposition des Adapter-Zapfens die Adapter-Zapfen-Kontaktfläche und die Hinterschneidung an der Zapfenaufnahme in Kontakt befindlich sind und zwischen der Adapter-Zapfen-Kontaktfläche und der Stützfläche oder Anlagefläche eine Klemmverbindung ausgebildet ist.

Hierdurch ist es möglich, den Adapterzapfen festklemmbar an der Nietwerkzeugaufnahme zu fixieren, ohne auf die Magnetkraft angewiesen zu sein, wodurch beim Arbeiten mit dem Nietwerkzeug eine besonders hohe Sicherheit gegeben ist, da ein Verrutschen des Nietwerkzeugadapters beim Pressvorgang verhindert wird.

Weiter wird die der Erfindung zugrunde liegende Aufgabe gelöst durch ein Nietwerkzeug zum Anordnen an einer Nietwerkzeugaufnahme, mit einem Zapfen, der einen gegenüber einer Zapfenlängsachse radial vorstehenden, den Zapfen maximal ringförmig umlaufenden Zapfenvorsprung aufweist oder eine Zapfenaufnahme mit einer maximal ringförmig umlaufenden Hinterschneidung.

Die Ausbildung des erfindungsgemäßen Nietwerkzeugs kann entsprechend dem bei der erfinderischen Werkzeugverbindung vorbeschriebenen Nietwerkzeug und deren Ausführungsformen ausgebildet sein, wobei hervorzuheben ist, dass das Nietwerkzeug erfindungsgemäß zumindest teilweise aus einem ferromagnetischen Material besteht und/oder an dem Nietwerkzeug ein Werkzeugmagnet angeordnet ist.

Anzumerken ist weiter, dass unter einem Nietwerkzeug nicht nur ein Döpper oder anderer Presskörper zu verstehen ist, sondern dass beispielsweise auch der Nietwerkzeugadapter als Nietwerkzeug ausbildbar sein kann.

Weiter wird die der Erfindung zugrunde liegende Aufgabe gelöst durch eine Nietwerkzeugaufnahme zum Anordnen eines Nietwerkzeuges, mit einem Zapfen der einen gegenüber einer Zapfenlängsachse radial vorstehenden, den Zapfen maximal ringförmig umlaufenden Zapfenvorsprung aufweist oder einer Zapfenaufnahme mit einer maximal ringförmig umlaufenden Hinterschneidung.

Die Ausbildung der erfinderischen Nietwerkzeugaufnahme kann entsprechend der bei der erfinderischen Werkzeugverbindung vorbeschriebenen Nietwerkzeugaufnahme und deren Ausführungsformen ausgebildet sein, wobei die Nietwerkzeugaufnahme erfindungsgemäß, zumindest teilweise aus ferromagnetischem Material besteht und/oder an der Nietwerkzeugaufnahme ein erster Aufnahmemagnet angeordnet ist.

Erfindungsgemäß ist dabei der Werkzeugmagnet jedoch zumindest teilweise in der Anlagefläche und/oder der Aufnahmemagnet zumindest teilweise in der Stützfläche angeordnet.

Ferner wird die der Erfindung zugrunde liegende Aufgabe durch einen Nietwerkzeugadapter zum Verbinden eines Nietwerkzeuges mit einer Nietwerkzeugaufnahme, mit einem an einem ersten Ende des Nietwerkzeugadapters angeordneten Adapterzapfen, mit einem gegenüber einer Adapterzapfenlängsachse radial vorstehenden, den Adapterzapfen maximal ringförmig umlaufenden Adapterzapfenvorsprung und/oder einer an einem dem ersten Ende gegenüberliegenden zweiten Ende des Nietwerkzeugadapters angeordnete Adapter-Zapfenaufnahme, mit einer maximal ringförmig umlaufenden Adapter Hinterschneidung gelöst. Erfindungsgemäß weist der Nietwerkzeugadapter an seinem ersten Ende und/oder seinem zweiten Ende ebenfalls einen den vorbe schriebenen Ausführungen entsprechenden Adapterwerkzeugmagneten (Werkzeugmagnet) und/oder einen Adapteraufnahmemagnet (Aufnahmemagnet) auf und ist zumindest teilweise ferromagnetisch ausgebildet.

Ebenso wie das Nietwerkzeug und die Nietwerkzeugaufnahme kann der erfindungsgemäße Nietwerkzeugadapter entsprechend dem bei der erfinderischen Werkzeugverbindung vorbeschriebenen Nietwerkzeugadapter und dessen Ausführungsformen ausgebildet sein.

Im Weiteren werden Details der Erfindung anhand von Figuren näher beschrieben. Schematisch und in perspektivischer Darstellung zeigen:
- Fig.1: einen teilweisen Querschnitt durch eine Ausführungsform der erfinderischen Werkzeugverbindung;
- Fig.2: einen Querschnitt durch die Ausführungsform der Werkzeugverbindung aus Figur 1 mit einem Zapfen in einer Einschubposition;
- Fig.3: einen teilweisen Querschnitt durch die Ausführungsform der Werkzeugverbindung aus Figur 1 mit einem Zapfen in einer Gebrauchsposition;
- Fig.4: einen teilweisen Querschnitt durch eine weitere Ausführungsform der Werkzeugverbindung mit einem Zapfen in einer Gebrauchsposition;
- Fig.5: eine Ansicht eines mit einem pneumatisch angetriebenen Werkzeugs verbundenen Nietwerkzeugadapters mit Adapter-Nietwerkzeugaufnahme.

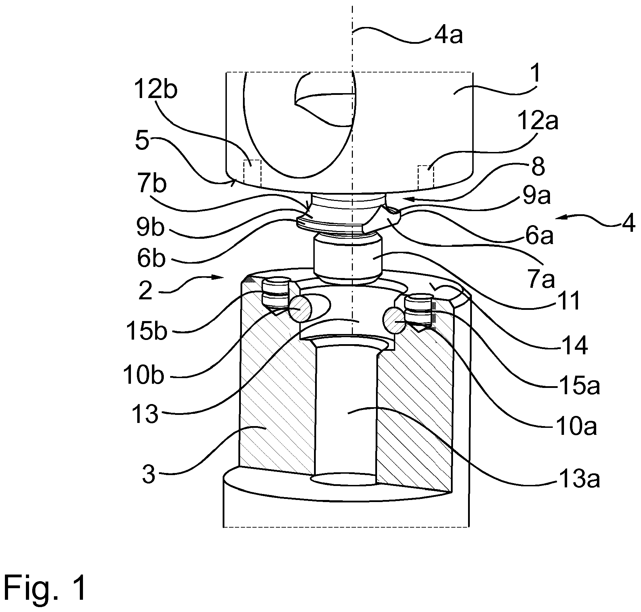

Figur 1 zeigt eine Werkzeugverbindung mit einem Döpper 1 als Nietwerkzeug und einer Nietwerkzeugaufnahme 2, die an einer Kolbenstange 3 eines pneumatisch angetriebenen Werkzeuges (hier nicht dargestellt) angeordnet ist. Der Döpper 1 ist in der dargestellten Position in die Nietwerkzeugaufnahme 2 einschiebbar.

Am Döpper 1 ist ein Zapfen 4 angeordnet, der sich senkrecht aus einer am Döpper 1 angeordneten Anlagefläche 5 erstreckt. Der Zapfen 4 weist zwei Zapfenvorsprünge 6a, 6b, die diametral um eine Zapfenlängsachse 4a, hier als gestrichelte Linie dargestellt, angeordnet sind, auf. Die Breite jedes Zapfenvorsprungs 6a, 6b entspricht der Breite eines Grundkörpers des Zapfens 4, so dass sich die Zapfenvorsprünge 6a, 6b um jeweils 90° um den Zapfen 4 erstrecken. Zwischen den Zapfenvorsprüngen 6a, 6b ist jeweils eine Zapfenflanke 7a, 7b ausgebildet. Weiter ist zwischen den Zapfenvorsprüngen 6a, 6b und der Anlagefläche 5 eine Zapfennut 8 ausgebildet.

Jeder Zapfenvorsprung 6a, 6b weist eine in Richtung der Anlagefläche 5 zeigende und als Bestandteil der Zapfennut 8 ausgebildete Kontaktfläche 9a, 9b auf. Die Kontaktflächen 9a, 9b sind zum Eingriff mit einer an der Nietwerkzeugaufnahme 2 angeordneten und als Bolzen 10a, 10b ausgebildeten Hinterschneidung ausgebildet.

Unterhalb der Zapfenvorsprünge 9a, 9b, d. h. in Zapfenlängsachsenrichtung 4a (hier als gestrichelte Linie dargestellt) und an der den Kontaktflächen 9a, 9b gegenüberliegenden Seite der Zapfenvorsprünge 9a, 9b ist ein Gewinde 11 angeordnet. Das Gewinde 11 ist optional und zum Anbringen des Döppers 1 an aus dem Stand der Technik bekannten Nietwerkzeugaufnahmen ausgebildet.

Weiter sind im Döpper 1 zwei Werkzeugmagnete 12a, 12b, die durch gestrichelte Linien angedeutet sind, angeordnet. Die Werkzeugmagnete 12a, 12b sind ebenfalls diametral um die Zapfenlängsachse 4a angeordnet. Die Werkzeugmagnete 12a, 12b sind parallel zu den Zapfenflanken 7a, 7b positioniert, in den Körper des Döppers 1 eingelassen und Bestandteil der Oberfläche der Anlagefläche 5. Ferner ist der Döpper 1 aus einem ferromagnetischen Material, hier aus einem Stahl, ausgebildet.

An der Nietwerkzeugaufnahme 2 ist eine rund ausgebildete Zapfenaufnahme 13 mit einer sacklochartigen Vertiefung 13a angeordnet. Weiter weist die Nietwerkzeugaufnahme 2 eine Stützfläche 14, die zum Abstützen des Nietwerkzeuges 1 mit der Anlagefläche 5 ausgebildet ist auf. In die Nietwerkzeugaufnahme 2 und als Bestandteil der Stützfläche 14 ausgebildet, sind zwei Aufnahmemagnete 15a, 15b angeordnet. Die Aufnahmemagnete 15a, 15b sind diametral um die Zapfenlängsachse 4a und parallel zu den Bolzen 10a, 10b angeordnet. Die Bolzen 10a, 10b sind quer, in diesem Fall 90°, zur Zapfenlängsachse angeordnet.

Die als Hinterschneidungen ausgebildeten Bolzen 10a, 10b sind in Bohrungen, die in die Nietwerkzeugaufnahme 2 eingelassen sind, eingebracht und in diesen verklemmt. Die Bolzen 10a, 10b schneiden die Zapfenaufnahme 13 derart, dass sie eine teilweise Verengung des Durchmessers der Zapfenaufnahme 13 im Bereich der eingelassenen Bolzen 10a, 10b erzeugen.

Die Nietwerkzeugaufnahme 2 ist ebenso, wie der Döpper 1, aus einem ferromagnetischen Material, hier ebenfalls Stahl, ausgebildet. Die Aufnahmemagnete 15a, 15b sind ebenso wie die Werkzeugmagnete 12a, 12b aus Neodym-Magneten ausgebildet.

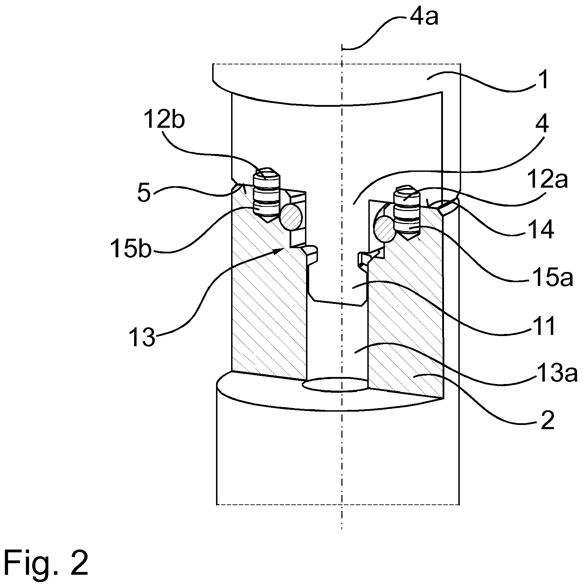

Figur 2 zeigt in einem perspektivischen, schematischen Querschnitt das Nietwerkzeug (Döpper) 1 und die Nietwerkzeugaufnahme 2 aus Figur 1 mit vollständig in die Zapfenaufnahme 13 eingebrachten Zapfen 4. In dieser Einbringposition ist das Gewinde 11 in der sacklochartigen Vertiefung 13a unterhalb der Zapfenaufnahme 13 kontaktlos eingeschoben. Die Aufnahmemagnete 15a, 15b und die Werkzeugmagnete 12a, 12b stehen in Längsachsenrichtung direkt angrenzend aneinander.

Die Anlagefläche 5 liegt an der Stützfläche 14 direkt an, so dass sich das Nietwerkzeug 1 an der Nietwerkzeugaufnahme 2 abstützt. Die Werkzeugmagnete 12a, 12b und die Aufnahmemagnete 15a, 15b sind in Kontakt und gleichpolig zueinander ausgerichtet, d. h. in der dargestellten Einschubposition stoßen sich die Werkzeugmagnete 12a, 12b und die Aufnahmemagnete 15a, 15b voneinander ab.

Um das Nietwerkzeug 1 an der Nietwerkzeugaufnahme 2 zu fixieren, ist das Nietwerkzeug 1 um die Zapfenlängsachse 4a in eine Gebrauchsposition drehbar ausgebildet.

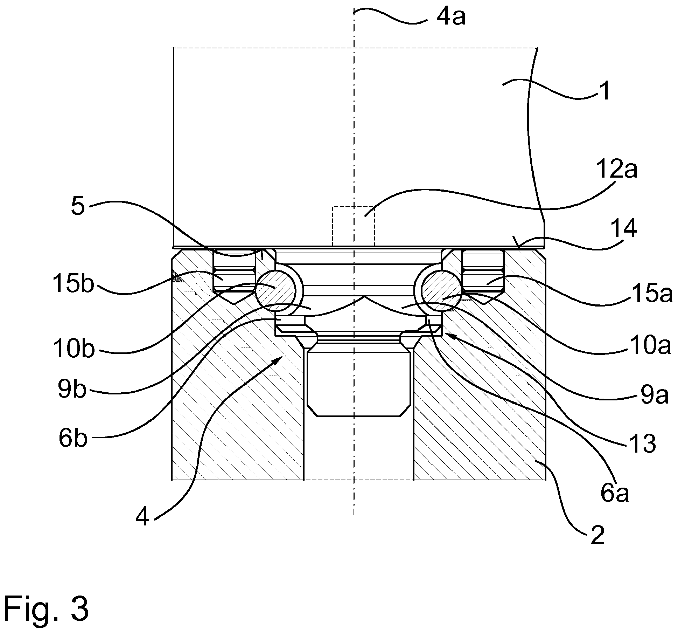

Figur 3 zeigt in einer schematischen und perspektivischen Ansicht des Nietwerkzeuges 1 einen teilweisen Querschnitt durch die Nietwerkzeugaufnahme 2 und den Zapfen 4 in der Gebrauchsposition. Gegenüber der in Figur 2 dargestellten Position ist in Figur 3 der Döpper 1 um die Zapfenlängsachse 4a um ca. 85° gedreht dargestellt.

Die Aufnahmemagnete 15a, 15b sind in magnetischer Wirkverbindung mit dem ferromagnetisch ausgebildeten Döpper 1 und ziehen diesen zu sich hin. Auch die Werkzeugmagnete 12a, 12b, hier gestrichelt dargestellt, sind in magnetischer Wirkverbindung mit der ferromagnetisch ausgebildeten Nietwerkzeugaufnahme 2 und ziehen diese ebenfalls zu sich hin, so dass die Anlagefläche 5 flächig an der Stützfläche 14 anliegt.

Der Zapfen 4 ist vollständig in die Zapfenaufnahme 13 eingebracht. Die Zapfenvorsprünge 6a, 6b überlappen sich in Richtung der Zapfenlängsachse 4a, mit der durch die zwei Bolzen 10a, 10b ausgebildeten Hinterschneidung. Die Kontaktflächen 9a, 9b an den Zapfenvorsprüngen 6a, 6b sind kontaktfrei zu den Bolzen 10a, 10b positioniert.

Im Betrieb, d. h. beim Setzen eines Niets, wird in Richtung der Zapfenlängsachse 4a ein Pressdruck vom Döpper 1 auf die Nietwerkzeugaufnahme 2 ausgeübt. Der Pressdruck wird ausschließlich über die Anlagefläche 5 und die Stützfläche 14 zwischen dem Döpper 1 und der Nietwerkzeugaufnahme 2 übertragen. Eine Belastung der Verbindung zwischen Zapfen 4 und Hinterschneidung 10a, 10b findet im Betrieb nicht statt. Die Verbindung ist somit im Betrieb belastungsfrei ausgebildet.

Beim Entfernen des Döppers 1 vom fertig gesetzten Niet kommt es häufig zum Verhaken des Döppers 1 am Nietkopf (hier nicht dargestellt), so dass eine axiale Zugkraft auf den Döpper 1 wirkt. Beim Auftreten von Zugkräften, die größer den Wirkkräften der Magnete 15a, 15b, 12a, 12b sind, wird der Döpper 1 von der Nietwerkzeugaufnahme 2 abgezogen, so dass sich die Anlagefläche 5 und die Stützfläche 14 voneinander lösen. Bei einem weiteren Abziehen des Döppers 1 stoßen die Kontaktflächen 9a, 9b gegen die Bolzen 10a, 10b, so dass ein vollständiges Abtrennen des Döppers 1 von der Nietwerkzeugaufnahme 2 verhindert wird. Sobald die Zugkräfte nachlassen, wird der Döpper 1 mittels der Magnetkräfte an die Nietwerkzeugaufnahme 2 zurückgezogen und richtig positioniert.

Zum Auswechseln des Döppers 1 wird der Döpper 1 um die Zapfenlängsachse 4a gedreht, bis die Werkzeugmagnete 12a, 12b und die Aufnahmemagnete 15a, 15b magnetisch aufeinander wirken, d. h. sich gegenseitig abstoßen, wodurch das Nietwerkzeug 1 in Zapfenlängsachsenrichtung von der Nietwerkzeugaufnahme 2 weggedrückt wird. Hierdurch ist eine besonders einfache Entnahme des Nietwerkzeugs 1 aus der Nietwerkzeugaufnahme 2 möglich.

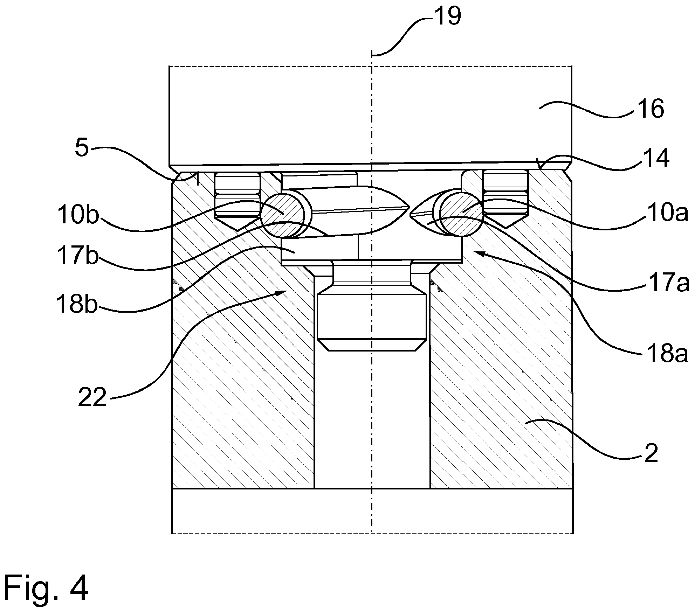

Figur 4 zeigt einen Querschnitt durch die Nietwerkzeugaufnahme 2 und in einer Ansicht eine weitere Ausführungsform eines an der Nietwerkzeugaufnahme 2 angeordneten Nietwerkzeuges 16 in seiner Gebrauchsposition. Die Nietwerkzeugaufnahme 2 entspricht den dargestellten Ausführungen aus den Figuren 1 bis 3.

Das in Figur 4 dargestellte Nietwerkzeug 16 unterscheidet sich gegenüber dem Döpper 1 aus den Figuren 1 bis 3 in der Ausrichtung, der an den Zapfenvorsprüngen 18a, 18b angeordneten Kontaktflächen 17a, 17b gegenüber einer Zapfenlängsachse 19, hier als gestrichelte Linie dargestellt. Die Kontaktflächen 17a, 17b weisen gegenüber der Zapfenlängsachse 19 eine Steigung (einen Winkel > 90°) auf, so dass sie in der Gebrauchsposition in direktem Kontakt mit den die Hinterschneidung bildenden Bolzen 10a, 10b sind.

Zwischen den an den Bolzen 20a, 20b anliegenden Kontaktflächen 17a, 17b und der Stützfläche 14 besteht somit in der Gebrauchsposition eine Klemmverbindung, die das Nietwerkzeug 16 fest mit der Nietwerkzeugaufnahme 2 verklemmt. Diese alternative Ausführungsform des Nietwerkzeuges 16 wird bevorzugt zum Verbinden eines Nietwerkzeugadapters mit der Nietwerkzeugaufnahme 2 eingesetzt. Diese alternative Ausführungsform verhindert selbst das Lösen der Anlagefläche 5 von der Stützfläche 14 bei auftretenden axialen Zugkräften (entlang der Zapfenlängsachsenrichtung) wirkungsvoll.

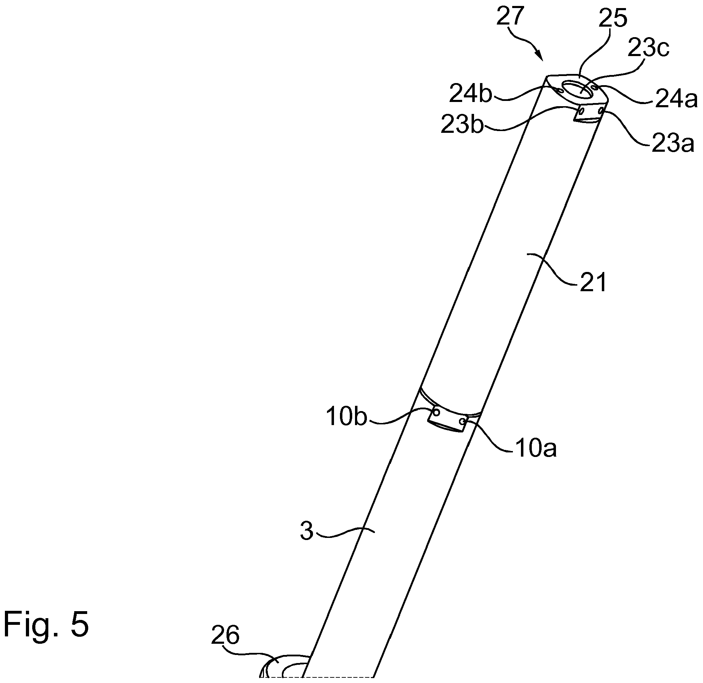

Figur 5 zeigt in einer schematischen, perspektivischen Ansicht ein pneumatisch angetriebenes Werkzeug 26 mit einer mit dem Werkzeug 26 verbundenen Kolbenstange 3, an der mittels der erfindungsgemäßen Werkzeugverbindung (siehe Figuren 1 - 4) ein Nietwerkzeugadapter 21 angeordnet ist.

Das mit der Kolbenstange 3 verbundene Ende des Nietwerkzeugadapters 21 weist einen gemäß dem in Figur 4 dargestellten Zapfen 22 ausgebildeten Adapterzapfen mit entsprechend ausgebildeten Adapterzapfenvorsprüngen (siehe Zapfenvorsprünge 18a, 18b) und Adapterkontaktflächen (siehe Kontaktflächen 17a, 17b) auf und ist somit mit der Nietwerkzeugaufnahme 2 an der Kolbenstange 3 in der Gebrauchsposition verklemmt.

Weiter zeigt Figur 5 die von der Außenseite in die Kolbenstange 3 eingeschobenen, die Hinterschneidung bildenden Bolzen 10a, 10b an der Nietwerkzeugaufnahme der Kolbenstange 3.

Weiter zeigt Fig. 5 eine Nietwerkzeugadapteraufnahme 27, die mit der in Figuren 1-3 dargestellten Nietwerkzeugaufnahme 2 identisch ausgebildet und zur Aufnahme eines Döppers 1 oder alternativ eines weiteren Nietwerkzeugadapters 21 geeignet ist. An der Nietwerkzeugadapteraufnahme 27 sind zwei von der Außenseite in den Nietwerkzeugadapter 21 eingeschobene und verklemmte Nietwerkzeugadapterbolzen 23a, 23b, die die Nietwerkzeugadapterhinterschneidung 23c bilden, angeordnet. Weiter sind zwei Adapter-Aufnahmemagnete 24a, 24b in der Nietwerkzeugadapteraufnahme 27 positioniert. Die Adapter-Aufnahmemagnete 24a, 24b sind Bestandteil der Oberfläche einer zum Abstützen eines Döppers (hier nicht dargestellt) ausgebildeten Adapterstützfläche 25.

## Patentansprüche

1. Werkzeugverbindung zur Anordnung eines Nietwerkzeuges (1, 16) an einer Nietwerkzeugaufnahme (2, 27), mit
- einer am Nietwerkzeug (1, 16) angeordneten Anlagefläche (5) zum Abstützen des Nietwerkzeuges (1, 16) an einer an der Nietwerkzeugaufnahme (2, 27) angeordneten Stützfläche (14, 25), wobei
- an dem Einen von Nietwerkzeug (1, 16) oder Nietwerkzeugaufnahme (2) ein Zapfen (4, 22) und an dem Anderen von Nietwerkzeug (1, 16) oder Nietwerkzeugaufnahme (2, 27) eine Zapfenaufnahme (13) angeordnet und der Zapfen (4, 22) in die Zapfenaufnahme (13) einbringbar und aus ihr entnehmbar ist
**dadurch gekennzeichnet, dass**
- das Nietwerkzeug (1, 16) an der Nietwerkzeugaufnahme (2) durch eine Magnetkraft lösbar arretierbar ist
- das Nietwerkzeug (1, 16) und/oder die Nietwerkzeugaufnahme (2, 27) zumindest teilweise ferromagnetisch ausgebildet ist und
- am Nietwerkzeug (1, 16) ein Werkzeugmagnet (12a, 12b) und/oder an der Nietwerkzeugaufnahme (2, 27) ein Aufnahmemagnet (15a, 15b, 24a, 24b) angeordnet ist und
der Werkzeugmagnet (12a, 12b) zumindest teilweise in der Anlagefläche (5) und/oder der Aufnahmemagnet (15a, 15b, 24a, 24b) zumindest teilweise in der Stützfläche (14, 25) angeordnet sind.

2. Werkzeugverbindung nach Anspruch 1, **dadurch gekennzeichnet, dass**
- das Nietwerkzeug (1, 16) zwischen einer Einschubposition, in der der Zapfen (4, 22) vollständig in die Zapfenaufnahme (13) einbringbar und aus ihr entnehmbar ist und
- einer Gebrauchsposition, in der der Zapfen (4, 22) in eine Zapfenlängsachsenrichtung in der Zapfenaufnahme (13) fixiert ist, verstellbar ist.

3. Werkzeugverbindung nach einem der vorhergehenden Ansprüche, **dadurch gekennzeichnet, dass** der Werkzeugmagnet (12a, 12b) in der Gebrauchsposition eine magnetische Anziehungskraft auf die Stützfläche (14, 25) ausübt und/oder der Aufnahmemagnet (15a, 15b, 24a, 24b) in der Gebrauchsposition eine magnetische Anziehungskraft auf die Anlagefläche (5) ausübt.

4. Werkzeugverbindung nach einem der vorhergehenden Ansprüche, **dadurch gekennzeichnet, dass** der Werkzeugmagnet (12a, 12b) derart in der Anlagefläche (5) angeordnet ist, dass er in der Einschubposition des Zapfens (4, 22) in die Zapfenaufnahme (13) in magnetischer Wirkverbindung mit dem Aufnahmemagnet (15a, 15b, 24a, 24b) befindlich ist.

5. Werkzeugverbindung nach einem der vorhergehenden Ansprüche, **dadurch gekennzeichnet, dass** der Werkzeugmagnet (12a, 12b) und der Aufnahmemagnet (15a, 15b, 24a, 24b) derart angeordnet sind, dass sich der Aufnahmemagnet (15a, 15b, 24a, 24b) und der Werkzeugmagnet (12a, 12b) in Wirkverbindung abstoßen.

6. Werkzeugverbindung nach einem der vorhergehenden Ansprüche, **gekennzeichnet durch**
- einen gegenüber einer Zapfenlängsachse (4a, 19) radial vorstehenden, den Zapfen (4, 22) maximal ringförmig umlaufenden Zapfenvorsprung (6a, 6b, 18a, 18b) und
- eine die Zapfenaufnahme (13) maximal ringförmig umlaufende Hinterschneidung (10a, 10b), wobei
- in der Gebrauchsposition des Zapfens (4, 22) der Zapfenvorsprung (6a, 6b, 18a, 18b) in Zapfenlängsachsenrichtung mit der Hinterschneidung in Wirkverbindung befindlich ist.

7. Werkzeugverbindung nach einem der vorhergehenden Ansprüche, **dadurch gekennzeichnet, dass** der Zapfenvorsprung (6a, 6b, 18a, 18b) eine Kontaktfläche (9a, 9b, 17a, 17b) aufweist, wobei die Kontaktfläche (9a, 9b, 17a, 17b) derart angeordnet ist, dass sie gegenüber der Zapfenlängsachse (4a, 19) eine Steigung aufweist.

8. Werkzeugverbindung nach einem der vorhergehenden Ansprüche, **gekennzeichnet durch** mindestens zwei im Abstand voneinander radial vom Zapfen (4, 22) vorstehende Zapfenvorsprünge (6a, 6b, 18a, 18b), die den Zapfen (4, 22) gemeinsam maximal ringförmig umlaufen und vorzugsweise in einer zumindest weitestgehend senkrecht zu einer Zapfenlängsachse (4a, 19) verlaufenden Ebene angeordnet sind.

9. Werkzeugverbindung nach einem der vorhergehenden Ansprüche, **dadurch gekennzeichnet, dass** zwei Zapfenvorsprünge (6a, 6b, 18a, 18b) diametral am Zapfen (4, 22) angeordnet sind.

10. Nietwerkzeug zum Anordnen an einer Nietwerkzeugaufnahme (2, 27), mit:
- einer am Nietwerkzeug (1, 16) angeordneten Anlagefläche (5) zum Abstützen des Nietwerkzeuges (1, 16) an einer an der Nietwerkzeugaufnahme (2, 27) angeordneten Stützfläche (14, 25),
- einem Zapfen (4, 22) der einen gegenüber einer Zapfenlängsachse (4a, 19) radial vorstehenden, den Zapfen (4, 22) maximal ringförmig umlaufenden Zapfenvorsprung (6a, 6b, 18a, 18b) aufweist oder
- einer Zapfenaufnahme (13) mit einer maximal ringförmig umlaufenden Hinterschneidung, **dadurch gekennzeichnet, dass** das Nietwerkzeug (1, 16):
- zumindest teilweise ferromagnetisch ausgebildet ist, und
- einen zumindest teilweise in der Anlagefläche (5) angeordneten Werkzeugmagneten (12a, 12b) aufweist

11. Nietwerkzeugaufnahme zum Anordnen eines Nietwerkzeuges (1, 16), mit:
- einer an der Nietwerkzeugaufnahme angeordneten Stützfläche (14, 25) zum Abstützen des Nietwerkzeuges (1, 6) an einer am Nietwerkzeug (1, 16) angeordneten Anlagefläche (5),
- einem Zapfen (4, 22) der einen gegenüber einer Zapfenlängsachse (4a, 19) radial vorstehenden, den Zapfen (4, 22) maximal ringförmig umlaufenden Zapfenvorsprung (6a, 6b, 18a, 18b) aufweist, oder
- einer Zapfenaufnahme (13) mit einer maximal ringförmig umlaufenden Hinterschneidung
**dadurch gekennzeichnet, dass** die Nietwerkzeugaufnahme (2, 27):
- zumindest teilweise ferromagnetisch ausgebildet ist, und
- einen zumindest teilweise in der Stützfläche (14, 25) angeordneten Aufnahmemagneten (15a, 15b, 24a, 24b) aufweist.

12. Nietwerkzeugadapter zum Verbinden eines Nietwerkzeuges (1, 16) mit einer Nietwerkzeugaufnahme (2, 27) **gekennzeichnet, durch**
- einen an einem ersten Ende des Nietwerkzeugadapters (21) angeordneten Adapter-Zapfen (4, 22) mit einem gegenüber einer Adapter-Zapfenlängsachse (4a, 19) radial vorstehenden, den Adapter-Zapfen (4, 22) maximal ringförmig umlaufenden Adapter-Zapfenvorsprung (6a, 6b, 18a, 18b)
- eine an einem dem ersten Ende gegenüberliegenden zweiten Ende des Nietwerkzeugadapters (21) angeordnete Adapter-Zapfenaufnahme (2, 27) mit einer maximal ringförmig umlaufenden Adapter-Hinterschneidung, und
- einen an seinem ersten Ende und/oder seinem zweiten Ende angeordneten Adapterwerkzeugmagneten und/oder einen Adapteraufnahmemagneten, wobei der Nietwerkzeugadapter zumindest teilweise ferromagnetisch ausgebildet ist.

## Claims

1. A tool connection for the arrangement of a riveting tool (1, 16) on a riveting tool receiver (2, 27) with
- a bearing surface (5) arranged on the riveting tool (1, 16) for supporting the riveting tool (1, 16) on a support surface (14, 25) arranged on the riveting tool receiver (2, 27), wherein
- a peg (4, 22) is arranged on one of the riveting tool (1, 16) and the riveting tool receiver (2) and a peg receiver (13) is arranged on the other of the riveting tool (1, 16) and the riveting tool receiver (2, 27) and the peg (4, 22) can be inserted into the peg receiver (13) and removed from it, **characterized in that**
- the riveting tool (1, 16) is lockable in a releasable manner on the riveting tool receiver (2) by a magnetic force,
- the riveting tool (1, 16) and/or the riveting tool receiver (2, 27) is designed to be at least partially ferromagnetic and
- a tool magnet (12a, 12b) is arranged on the riveting tool (1, 16) and/or a receiver magnet (15a, 15b, 24a, 24b) is arranged on the riveting tool receiver (2, 27) and
the tool magnet (12a, 12b) is arranged at least partially in the bearing surface (5) and/or the receiver magnet (15a, 15b, 24a, 24b) is arranged at least partially in the support surface (14, 25).

2. The tool connection according to claim 1, **characterized in that**
- the riveting tool (1, 16) is adjustable between an insertion position, in which the peg (4, 22) is completely insertable into the peg receiver (13) and removable from it and
- a utilization position, in which the peg (4, 22) is immobilized in the peg receiver (13) in a peg longitudinal direction.

3. The tool connection according to one of the preceding claims, **characterized in that** the tool magnet (12a, 12b) in the utilization position exerts a magnetic pull on the support surface (14, 25) and/or the receiver magnet (15a, 15b, 24a, 24b) in the utilization position exerts a magnetic pull on the bearing surface (5).

4. The tool connection according to one of the preceding claims, **characterized in that** the tool magnet (12a, 12b) is arranged in the bearing surface (5) such that it is in magnetic operative connection with the receiver magnet (15a, 15b, 24a, 24b) in the insertion position of the peg (4, 22) into the peg receiver (13).

5. The tool connection according to one of the preceding claims, **characterized in that** the tool magnet (12a, 12b) and the receiver magnet (15a, 15b, 24a, 24b) are arranged such that the receiver magnet (15a, 15b, 24a, 24b) and the tool magnet (12a, 12b) repel each other in operative connection.

6. The tool connection according to one of the preceding claims, **characterized by**
- a peg projection (6a, 6b, 18a, 18b) protruding radially with respect to a peg longitudinal axis (4a, 19) and surrounding the peg (4, 22) in a maximally annular manner and
- an undercut (10a, 10b) surrounding the peg receiver (13) in a maximally annular manner, wherein
- in the utilization position of the peg (4, 22), the peg projection (6a, 6b, 18a, 18b) is in operative connection with the undercut in the direction of the peg longitudinal axis.

7. The tool connection according to one of the preceding claims, **characterized in that** the peg projection (6a, 6b, 18a, 18b) has a contact surface (9a, 9b, 17a, 17b), wherein the contact surface (9a, 9b, 17a, 17b) is arranged such that it has a slope with respect to the peg longitudinal axis (4a, 19).

8. The tool connection according to one of the preceding claims, **characterized by** at least two peg projections (6a, 6b, 18a, 18b) protruding radially from the peg (4, 22) at a distance from each other, which surround the peg (4, 22) together in a maximally annular manner and are preferably arranged in a plane progressing at least mainly perpendicular to a peg longitudinal axis (4a, 19).

9. The tool connection according to one of the preceding claims, **characterized in that** two peg projections (6a, 6b, 18a, 18b) are arranged diametrically on the peg (4, 22).

10. A riveting tool for arrangement on a riveting tool receiver (2, 27) with:
- a bearing surface (5) arranged on the riveting tool (1, 16) for supporting the riveting tool (1, 16) on a support surface (14, 25) arranged on the riveting tool receiver (2, 27),
- a peg (4, 22), which has a peg projection (6a, 6b, 18a, 18b) protruding radially with respect to a peg longitudinal axis (4a, 19) and surrounding the peg (4, 22) in a maximally annular manner or
- a peg receiver (13) with an undercut surrounding it in a maximally annular manner,
**characterized in that** the riveting tool (1, 16):
- is designed to be at least partially ferromagnetic and
- has a tool magnet (12a, 12b) arranged at least partially in the bearing surface (5).

11. A riveting tool receiver for arrangement of a riveting tool (1, 16) with:
- a support surface (14, 25) arranged on the riveting tool receiver for supporting the riveting tool (1, 6) on a bearing surface (5) arranged on the riveting tool (1, 16),
- a peg (4, 22), which has a peg projection (6a, 6b, 18a, 18b) protruding radially with respect to a peg longitudinal axis (4a, 19) and surrounding the peg (4,22) in a maximally annular manner or
- a peg receiver (13) with an undercut surrounding it in a maximally annular manner,
**characterized in that** the riveting tool receiver (2, 27):
- is designed to be at least partially ferromagnetic and
- has a receiver magnet (15a, 15b, 24a, 24b) arranged at least partially in the support surface (14, 25).

12. A riveting tool adapter for connecting a riveting tool (1, 16) with a riveting tool receiver (2, 27), **characterized by**
- an adapter peg (4, 22) arranged on a first end of the riveting tool adapter (21) with an adapter peg projection (6a, 6b, 18a, 18b) protruding radially with respect to an adapter peg longitudinal axis (4a, 19) and surrounding the adapter peg (4, 22) in a maximally annular manner
- an adapter peg receiver (2, 27) arranged on a second end of the riveting tool adapter (21) lying opposite the first end with an adapter undercut surrounding it in a maximally annular manner and
- an adapter tool magnet and/or an adapter receiver magnet arranged on its first end and/or its second end,
wherein the riveting tool adapter is designed to be at least partially ferromagnetic.

## Revendications

1. Liaison d'outil pour l'arrangement d'un outil de rivetage (1, 16) sur un support d'outil de rivetage (2, 27), comprenant
- une surface d'application (5) disposée sur l'outil de rivetage (1, 16) pour l'appui de l'outil de rivetage (1, 16) sur une surface d'appui (14, 25) disposée sur le support d'outil de rivetage (2, 27), où
- un pivot (4, 22) est disposé sur l'un parmi l'outil de rivetage (1, 16) et le support d'outil de rivetage (2) et un support de pivot (13) est disposé sur l'autre parmi l'outil de rivetage (1, 16) et le support d'outil de rivetage (2, 27), et le pivot (4, 22) peut être inséré dans le support de pivot (13) et retiré de celui-ci,
**caractérisée en ce que**
- l'outil de rivetage (1, 16) peut être bloqué de façon amovible sur le support d'outil de rivetage (2) par une force magnétique,
- l'outil de rivetage (1, 16) et/ou le support d'outil de rivetage (2, 27) est conçu de manière à être au moins partiellement ferromagnétique, et
- un aimant d'outil (12a, 12b) est disposé sur l'outil de rivetage (1, 16) et/ou un aimant de support (15a, 15b, 24a, 24b) est disposé sur le support d'outil de rivetage (2, 27), et
l'aimant d'outil (12a, 12b) est disposé au moins partiellement dans la surface d'application (5) et/ou l'aimant de support (15a, 15b, 24a, 24b) est disposé au moins partiellement dans la surface d'appui (14, 25).

2. Liaison d'outil selon la revendication 1, **caractérisée en ce que**
- l'outil de rivetage (1, 16) peut être déplacé entre une position d'insertion, dans laquelle le pivot (4, 22) peut être introduit entièrement dans le support de pivot (13) et retiré de celui-ci, et
- une position d'utilisation, dans laquelle le pivot (4, 22) est fixé dans le support de pivot (13) dans une direction d'axe longitudinal de pivot.

3. Liaison d'outil selon l'une des revendications précédentes, **caractérisée en ce que** l'aimant d'outil (12a, 12b) exerce une force d'attraction magnétique sur la surface d'appui (14, 25) dans la position d'utilisation, et/ou l'aimant de support (15a, 15b, 24a, 24b) exerce une force d'attraction magnétique sur la surface d'application (5) dans la position d'utilisation.

4. Liaison d'outil selon l'une des revendications précédentes, **caractérisée en ce que** l'aimant d'outil (12a, 12b) est disposé de telle façon dans la surface d'application (5), qu'il est en liaison fonctionnelle magnétique avec l'aimant de support (15a, 15b, 24a, 24b) lorsque le pivot (4, 22) se trouve dans la position d'insertion dans le support de pivot (13).

5. Liaison d'outil selon l'une des revendications précédentes, **caractérisée en ce que** l'aimant d'outil (12a, 12b) et l'aimant de support (15a, 15b, 24a, 24b) sont disposés de telle façon que l'aimant de support (15a, 15b, 24a, 24b) et l'aimant d'outil (12a, 12b) se repoussent en liaison fonctionnelle.

6. Liaison d'outil selon l'une des revendications précédentes, **caractérisée par**
- une saillie de pivot (6a, 6b, 18a, 18b) entourant le pivot (4, 22) de façon tout au plus annulaire et faisant saillie radialement par rapport à un axe longitudinal de pivot (4a, 19), et
- une contre-dépouille (10a, 10b) entourant le support de pivot (13) de façon tout au plus annulaire, où
- dans la position d'utilisation du pivot (4, 22), la saillie de pivot (6a, 6b, 18a, 18b) est en liaison fonctionnelle avec la contre-dépouille dans la direction de l'axe longitudinal de pivot.

7. Liaison d'outil selon l'une des revendications précédentes, **caractérisée en ce que** la saillie de pivot (6a, 6b, 18a, 18b) présente une surface de contact (9a, 9b, 17a, 17b), la surface de contact (9a, 9b, 17a, 17b) étant disposée de manière à présenter une pente par rapport à l'axe longitudinal de pivot (4a, 19).

8. Liaison d'outil selon l'une des revendications précédentes, **caractérisée par** au moins deux saillies de pivot (6a, 6b, 18a, 18b) faisant saillie à partir du pivot (4, 22) tout en étant radialement espacées l'une de l'autre, lesquelles entourent le pivot (4, 22) conjointement de façon tout au plus annulaire et sont disposées dans un plan s'étendant au moins majoritairement perpendiculairement à un axe longitudinal de pivot (4a, 19).

9. Liaison d'outil selon l'une des revendications précédentes, **caractérisée en ce que** deux saillies de pivot (6a, 6b, 18a, 18b) sont disposées diamétralement sur le pivot (4, 22).

10. Outil de rivetage destiné à être placé sur un support d'outil de rivetage (2, 27), comprenant
- une surface d'application (5) disposée sur l'outil de rivetage (1, 16), pour l'appui de l'outil de rivetage (1, 16) sur une surface d'appui (14, 25) disposée sur le support d'outil de rivetage (2, 27),
- un pivot (4, 22) présentant une saillie de pivot (6a, 6b, 18a, 18b) entourant le pivot (4, 22) de façon tout au plus annulaire et faisant saillie radialement par rapport à un axe longitudinal de pivot (4a, 19), ou
- un support de pivot (13) avec une contre-dépouille périphérique de façon tout au plus annulaire,
**caractérisé en ce que** l'outil de rivetage (1, 16) :
- est conçu de manière à être au moins partiellement ferromagnétique, et
- présente un aimant d'outil (12a, 12b) disposé au moins partiellement dans la surface d'application (5).

11. Support d'outil de rivetage pour l'arrangement d'un outil de rivetage (1, 16), comprenant :
- une surface d'appui (14, 25) disposée sur le support d'outil de rivetage, pour l'appui de l'outil de rivetage (1, 6) sur une surface d'application (5) disposée sur l'outil de rivetage (1, 16),
- un pivot (4, 22) présentant une saillie de pivot (6a, 6b, 18a, 18b) entourant le pivot (4, 22) de façon tout au plus annulaire et faisant saillie radialement par rapport à l'axe longitudinal de pivot (4a, 19), ou
- un support de pivot (13) avec une contre-dépouille périphérique de façon tout au plus annulaire,
**caractérisé en ce que** le support d'outil de rivetage (2, 27) :
- est conçu de manière à être au moins partiellement ferromagnétique, et
- présente un aimant de support (15a, 15b, 24a, 24b) disposé au moins partiellement dans la surface d'appui (14, 25).

12. Adaptateur d'outil de rivetage pour la liaison d'un outil de rivetage (1, 16) avec un support d'outil de rivetage (2, 27), **caractérisé par**
- un pivot d'adaptateur (4, 22) disposé à une première extrémité de l'adaptateur d'outil de rivetage (21), avec une saillie de pivot d'adaptateur (6a, 6b, 18a, 18b) entourant le pivot d'adaptateur (4, 22) de façon tout au plus annulaire et faisant saillie radialement par rapport à un axe longitudinal de pivot d'adaptateur (4a, 19),
- un support de pivot d'adaptateur (2, 27) disposé à une deuxième extrémité de l'adaptateur d'outil de rivetage (21) opposée à la première extrémité, avec une contre-dépouille d'adaptateur périphérique de façon tout au plus annulaire, et
- un aimant d'outil d'adaptateur et/ou un aimant de support d'adaptateur disposé(s) à la première extrémité et/ou à la deuxième extrémité de celui-ci,
dans lequel l'adaptateur d'outil de rivetage est conçu de manière à être au moins partiellement ferromagnétique.
